# EUROPEAN PATENT APPLICATION

(11) **EP 4 618 666 A1**
(43) Date of publication of application: **17.09.2025**
(21) Application number: 23887899.5
(22) Date of filing: 01.11.2023
(51) Int. Cl.: H04W 72/0453

(54) **METHOD AND APPARATUS FOR USE IN WIRELESS COMMUNICATION NODE**

(30) Priority: 08.11.2022 CN 202211388144
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/129069
(87) International publication number: WO 2024/099209

(57) **Abstract**

The present application discloses a method and apparatus for use in a wireless communication node. The method comprises: a first node receiving a target information set; and sending a first signal in a first time-frequency resource group, or abandoning sending a first signal in a first time-frequency resource group. First serving cell configuration information is used for determining a first BWP, and the first serving cell configuration information is used for indicating a first identity and a second identity. The target information set is used for determining a reference time-frequency resource set, the reference time-frequency resource set belongs to the first BWP in a frequency domain, and the first time-frequency resource group belongs to the reference time-frequency resource set. The first signal is associated with at least one of the first identity or the second identity, and whether the first signal is sent in the first time-frequency resource group at least depends on an identity associated with the first signal.

## Description

### Technical Field

The present application relates to a transmission method and apparatus for a wireless communication system, especially a transmission method and apparatus for wireless signals in a wireless communication system supporting a cellular network.

### Background Art

In the existing NR (New Radio) system, spectrum resources are statically divided into an FDD (Frequency Division Duplexing) spectrum and a TDD (Time Division Duplexing) spectrum. For the TDD spectrum, a base station and user equipment are both operated in a half-duplex mode. This half-duplex mode avoids a self-interference and can alleviate the impact of a cross-link interference, but it also brings about a decrease in resource utilization rate and an increase in latency. In view of these problems, supporting a flexible duplex mode on the TDD spectrum or the FDD spectrum has become a possible solution. At the 3GPP RAN (Radio Access Network) 1 #103e meeting, research on a duplex technology was agreed. Therein, subband nonoverlapping full duplex was proposed, i.e., a base station device is supported to simultaneously perform sending and receiving on two subbands. Communications under this mode will suffer from serious interferences, including the self-interference and the cross-link interference.

### Summary of the Invention

The inventor found through research that how to determine whether one signal is abandoned from being sent is a key issue.

In view of the above-mentioned problem, the present application discloses a solution. It should be explained that in the description of the present application, the flexible duplex mode is only used as a typical application scenario or example; and the present application can also be applied to application scenarios under a half-duplex mode. Further, the use of a unified design solution for different scenarios (including but not limited to SBFD, other flexible duplex modes or full-duplex modes, variable link direction modes, traditional duplex modes, half-duplex modes, etc.) can also facilitate the reduction of hardware complexity and costs. In the absence of conflicts, the embodiments in any node of the present application and the features in the embodiments can be applied to any other node. In the absence of conflicts, the embodiments of the present application and the features in the embodiments can be arbitrarily combined with each other.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

The present application discloses a method for use in a wireless communication first node, comprising:
receiving a target information set; and
sending a first signal in a first time-frequency resource group, or abandoning sending a first signal in a first time-frequency resource group,
wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, the problem to be solved by the present application comprises: how to determine whether one signal is abandoned from being sent.

According to one aspect of the present application, it is characterized in that when the first signal is associated with the first identity, the first signal is sent in the first time-frequency resource group; when the first signal is associated with the second identity, the first signal is abandoned from being sent in the first time-frequency resource group.

According to one aspect of the present application, it is characterized in that the reference time-frequency resource set comprises a first time-frequency resource subset and a second time-frequency resource subset, and the first time-frequency resource subset and the second time-frequency resource subset are respectively associated with the first identity and the second identity; the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

According to one aspect of the present application, it is characterized in that the first BWP is one downlink BWP, and the reference time-frequency resource set is reserved for an uplink transmission.

According to one aspect of the present application, it is characterized in that the first serving cell configuration information is used for configuring a first serving cell, and the first BWP is one BWP in the first serving cell; and the first identity is a PCI of the first serving cell, and the second identity is one PCI other than the PCI of the first serving cell.

According to one aspect of the present application, it is characterized in that a target reference signal resource is used for determining a spatial characteristic of the first signal, and the target reference signal resource is associated with one of the first identity or the second identity; and an identity of the first identity and the second identity, which is associated with the first signal, comprises an identity of the first identity and the second identity, to which the target reference signal resource is associated.

According to one aspect of the present application, it is characterized in that the first time-frequency resource group is any time-frequency resource group of M time-frequency resource groups, the M time-frequency resource groups are reserved for a transmission of a first bit block, and the first signal carries parts or all of bits in the first bit block.

The present application discloses a method for use in a wireless communication second node, comprising:
sending a target information set; and
receiving a first signal in a first time-frequency resource group, or abandoning receiving a first signal in a first time-frequency resource group,
wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

According to one aspect of the present application, it is characterized in that when the first signal is associated with the first identity, the first signal is sent in the first time-frequency resource group; when the first signal is associated with the second identity, the first signal is abandoned from being sent in the first time-frequency resource group.

According to one aspect of the present application, it is characterized in that the reference time-frequency resource set comprises a first time-frequency resource subset and a second time-frequency resource subset, and the first time-frequency resource subset and the second time-frequency resource subset are respectively associated with the first identity and the second identity; the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

According to one aspect of the present application, it is characterized in that the first BWP is one downlink BWP, and the reference time-frequency resource set is reserved for an uplink transmission.

According to one aspect of the present application, it is characterized in that the first serving cell configuration information is used for configuring a first serving cell, and the first BWP is one BWP in the first serving cell; and the first identity is a PCI of the first serving cell, and the second identity is one PCI other than the PCI of the first serving cell.

According to one aspect of the present application, it is characterized in that a target reference signal resource is used for determining a spatial characteristic of the first signal, and the target reference signal resource is associated with one of the first identity or the second identity; and an identity of the first identity and the second identity, which is associated with the first signal, comprises an identity of the first identity and the second identity, to which the target reference signal resource is associated.

According to one aspect of the present application, it is characterized in that the first time-frequency resource group is any time-frequency resource group of M time-frequency resource groups, the M time-frequency resource groups are reserved for a transmission of a first bit block, and the first signal carries parts or all of bits in the first bit block.

The present application discloses a first node device for use in wireless communication, comprising:
a first receiver for receiving a target information set; and
a first transmitter for sending a first signal in a first time-frequency resource group, or abandoning sending a first signal in a first time-frequency resource group,
wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

The present application discloses a second node device for use in wireless communication, comprising:
a second transmitter for sending a target information set; and
a second receiver for receiving a first signal in a first time-frequency resource group, or abandoning receiving a first signal in a first time-frequency resource group,
wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, compared with a traditional solution, the present application has the following advantages:
- when determining whether to abandon a transmission of one signal, different application scenarios are considered, such as different duplex modes, different interference environments, different antennas, different spatial characteristics, etc.

### Brief Description of the Drawings

Other features, purposes, and advantages of the present application will become more apparent by reading the detailed description of the non-limiting embodiments with reference to the following figures:
FIG. 1 shows a flow chart of a target information set and a first signal according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a flow chart of a transmission according to one embodiment of the present application;
FIG. 6 shows a schematic diagram of determining whether a first signal is sent in a first time-frequency resource group, respectively, according to one embodiment of the present application;
FIG. 7 shows a schematic diagram of determining whether a first signal is sent in a first time-frequency resource group according to another embodiment of the present application;
FIG. 8 shows a schematic diagram of a first identity and a second identity according to one embodiment of the present application;
FIG. 9 shows a schematic diagram of a reference time-frequency resource set according to one embodiment of the present application;
FIGS. 10A-10B show schematic diagrams of a reference time-frequency resource set, respectively, according to another embodiment of the present application;
FIG. 11 shows a schematic diagram of a reference time-frequency resource set according to one embodiment of the present application;
FIGS. 12A-12B show schematic diagrams of an identity associated with a first signal, respectively, according to one embodiment of the present application;
FIG. 13 shows a schematic diagram of an identity associated with a first signal according to one embodiment of the present application;
FIG. 14 shows a schematic diagram of M time-frequency resource sets according to one embodiment of the present application;
FIG. 15 shows a structural block diagram of a processing device for use in a first node device according to one embodiment of the present application; and
FIG. 16 shows a structural block diagram of a processing device for use in a second node device according to one embodiment of the present application.

### Detailed Description of Embodiments

The technical solution of the present application will be further described in detail below in conjunction with the accompanying drawings. It should be explained that in the absence of conflicts, the embodiments in the present application and the features in the embodiments can be arbitrarily combined with each other.

### Embodiment 1

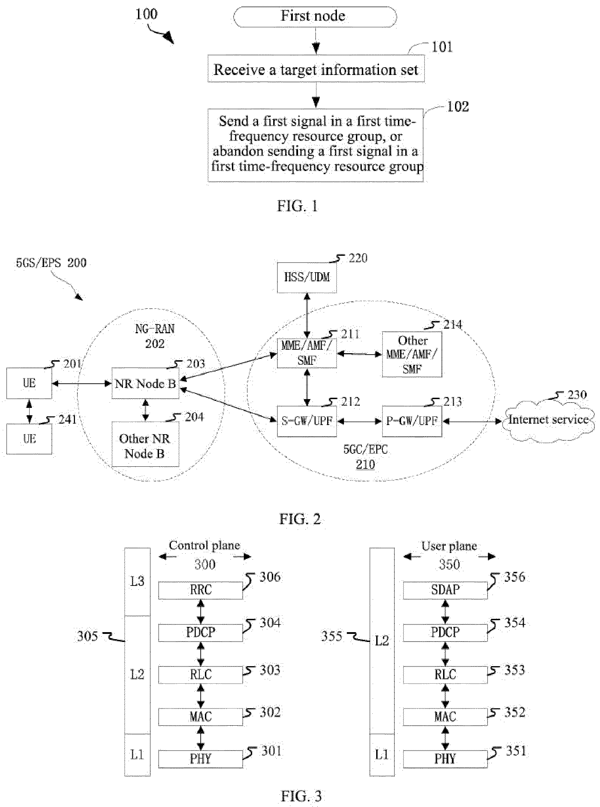

Embodiment 1 illustrates a flow chart of a target information set and a first signal according to one embodiment of the present application, as shown in FIG. 1. In 100 shown in FIG. 1, each block represents one step.

In Embodiment 1, a first node in the present application receives a target information set in step 101; In step 102, a first signal is sent in a first time-frequency resource group, or the first signal is abandoned from being sent in the first time-frequency resource group; wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, the first BWP (BandWidth Part) is one downlink BWP.

As one embodiment, the first BWP comprises the downlink BWP.

As one embodiment, the first serving cell configuration information comprises one IE (Information Element) in RRC signaling.

As one embodiment, the first serving cell configuration information comprises parts or all of the information in one IE in the RRC signaling.

As one embodiment, the first serving cell configuration information comprises parts or all of the information in one or more IEs in the RRC signaling.

As one embodiment, the first serving cell configuration information comprises IE ServingCellConfig.

As one embodiment, the first serving cell configuration information comprises IE ServingCellConfigCommon.

As one embodiment, the first serving cell configuration information comprises IE SCellConfig.

As one embodiment, the first serving cell configuration information comprises IE sCellConfigCommon.

As one embodiment, the first serving cell configuration information comprises IE sCellConfigDedicated.

As one embodiment, the first serving cell configuration information is used for configuring a first serving cell, and the first BWP is one BWP in the first serving cell.

As one sub-embodiment of this embodiment, the first serving cell is one serving cell of the first node.

As one sub-embodiment of this embodiment, the first identity is used for identifying the first serving cell.

As one sub-embodiment of this embodiment, the first serving cell corresponds to the first identity.

As one sub-embodiment of this embodiment, the first serving cell is associated with the first identity.

As one sub-embodiment of this embodiment, the first identity is a PCI (Physical Cell Identity) of the first serving cell, and the second identity is one PCI different from the first identity.

As one sub-embodiment of this embodiment, the first identity is the PCI of the first serving cell, and the second identity is one PCI configured for the first serving cell, which is different from the PCI of the first serving cell.

As one sub-embodiment of this embodiment, the first identity is PhysCellId of the first serving cell, and the second identity is one PhysCellId which is different from the first identity.

As one sub-embodiment of this embodiment, the first identity is PhysCellId of the first serving cell, and the second identity is one PhysCellId configured for the first serving cell, which is different from the PhysCellId of the first serving cell.

As one embodiment, the first identity and the second identity are different.

As one embodiment, the first identity and the second identity are two different non-negative integers.

As one embodiment, the first identity and the second identity are two different PCIs.

As one embodiment, the first identity and the second identity are two different PhysCellIds.

As one embodiment, the first identity and the second identity are two different positive integers.

As one embodiment, the first identity is one Serving Cell PCI, and the second identity is one additional PCI.

As one embodiment, for the specific definition of the PhysCellId, refer to Section 6.3.2 of 3GPP TS38.331.

As one embodiment, for the specific definitions of the PhysCellId, the Serving Cell PCI, and the Additional PCI, refer to 3GPP TS38.214.

As one embodiment, at least one time-frequency resource in the reference time-frequency resource set is associated with the first identity, and at least one time-frequency resource in the reference time-frequency resource set is associated with the second identity.

As one embodiment, at least one time-frequency resource in the reference time-frequency resource set corresponds to the first identity, and at least one time-frequency resource in the reference time-frequency resource set corresponds to the second identity.

As one embodiment, the reference time-frequency resource set comprises a first time-frequency resource subset and a second time-frequency resource subset, and the first time-frequency resource subset and the second time-frequency resource subset are respectively associated with the first identity and the second identity.

As one embodiment, the reference time-frequency resource set comprises a first time-frequency resource subset and a second time-frequency resource subset, and the first time-frequency resource subset and the second time-frequency resource subset respectively correspond to the first identity and the second identity.

As one embodiment, parts or all of the time-frequency resources in the reference time-frequency resource set are associated with the first identity.

As one embodiment, parts or all of the time-frequency resources in the reference time-frequency resource set are associated with the second identity.

As one embodiment, at least one time-frequency resource in the reference time-frequency resource set is associated with the first identity and the second identity.

As one embodiment, the reference time-frequency resource set is associated with the first identity and the second identity.

As one embodiment, at least one time-frequency resource in the reference time-frequency resource set is simultaneously associated with the first identity and the second identity.

As one embodiment, the reference time-frequency resource set is simultaneously associated with the first identity and the second identity.

As one embodiment, the meaning of the sentence "the target information set is used for determining a reference time-frequency resource set" comprises: the target information set is used for determining at least one time-frequency resource in the reference time-frequency resource set.

As one embodiment, the meaning of the sentence "the target information set is used for determining a reference time-frequency resource set" comprises: the target information set is used for determining parts of time-frequency resources in the reference time-frequency resource set.

As one embodiment, the meaning of the sentence "the target information set is used for determining a reference time-frequency resource set" comprises: the target information set is used for determining all time-frequency resources in the reference time-frequency resource set.

As one embodiment, the meaning of the sentence "the target information set is used for determining a reference time-frequency resource set" comprises: the target information set is used for determining only the first time-frequency resource subset of the first time-frequency resource subset and the second time-frequency resource subset.

As one embodiment, the target information set comprises a first information subset and a second information subset, the first information subset is used for indicating the first time-frequency resource subset, and the second information subset is used for indicating the first time-frequency resource subset.

As one embodiment, the first serving cell configuration information comprises the first information subset and the second information subset.

As one embodiment, the first serving cell configuration information comprises only the first information subset of the first information subset and the second information subset.

As one embodiment, the first information subset and the second information subset are respectively included by different IE ServingCellConfigs.

As one embodiment, the first information subset and the second information subset are included by the same IE ServingCellConfig.

As one embodiment, the first serving cell configuration information comprises the target information set.

As one embodiment, the first serving cell configuration information comprises parts or all of the information in the target information set.

As one embodiment, parts or all of the information in the target information set do not belong to the first serving cell configuration information.

As one embodiment, the target information set is carried by the RRC signaling.

As one embodiment, the target information set comprises one RRC signaling.

As one embodiment, the target information set comprises a plurality of RRC signaling.

As one embodiment, the target information set comprises one or more fields in one IE.

As one embodiment, the target information set comprises parts or all of the fields in one IE.

As one embodiment, the target information set comprises parts or all of the fields in one or more IEs.

As one embodiment, the target information set comprises parts or all of the information in IE TDD-UL-DL-ConfigDedicated.

As one embodiment, the target information set comprises parts or all of the information in IE TDD-UL-DL-ConfigCommon.

As one embodiment, the target information set comprises IE BWP-Downlink.

As one embodiment, the target information set comprises one or more fields in IE BWP-Downlink.

As one embodiment, the target information set comprises IE BWP-DownlinkCommon.

As one embodiment, the target information set comprises one or more fields in IE BWP-DownlinkCommon.

As one embodiment, the target information set comprises IE BWP-DownlinkDedicated.

As one embodiment, the target information set comprises one or more fields in IE BWP-DownlinkDedicated.

As one embodiment, the target information set comprises parts or all of the fields in one IE with BWP included in the name.

As one embodiment, the target information set comprises parts or all of the fields in one IE with Downlink included in the name.

As one embodiment, the target information set comprises parts or all of the fields in one IE with Common included in the name.

As one embodiment, the target information set comprises parts or all of the fields in one IE with Dedicated included in the name.

As one embodiment, the target information set is cell-specific.

As one embodiment, the target information set is UE group-specific.

As one embodiment, the target information set is UE-specific.

As one embodiment, the reference time-frequency resource set comprises at least one RE (Resource Element).

As one embodiment, the reference time-frequency resource set comprises a plurality of RBs (Resource Blocks) in the frequency domain.

As one embodiment, the reference time-frequency resource set comprises one RB in the frequency domain.

As one embodiment, the reference time-frequency resource set comprises one RB or a plurality of continuous RBs in the frequency domain.

As one embodiment, the reference time-frequency resource set comprises a plurality of RBs in the frequency domain, and two RBs in the plurality of RBs are discontinuous.

As one embodiment, the reference time-frequency resource set comprises one or more symbols in a time domain.

As one embodiment, the reference time-frequency resource set comprises one or more slots in the frequency domain.

As one embodiment, the reference time-frequency resource set comprises parts or all of the symbols in one or more slots in the frequency domain.

As one embodiment, the reference time-frequency resource set comprises one or more subframes in the frequency domain.

As one embodiment, the reference time-frequency resource set comprises parts or all of the symbols in one or more subframes in the frequency domain.

As one embodiment, the first time-frequency resource subset comprises a plurality of RBs in the frequency domain.

As one embodiment, the first time-frequency resource subset comprises one RB in the frequency domain.

As one embodiment, the first time-frequency resource subset comprises one RB or a plurality of continuous RBs in the frequency domain.

As one embodiment, the second time-frequency resource subset comprises a plurality of RBs in the frequency domain.

As one embodiment, the second time-frequency resource subset comprises one RB in the frequency domain.

As one embodiment, the second time-frequency resource subset comprises one RB or a plurality of continuous RBs in the frequency domain.

As one embodiment, the target information set is used for indicating the reference time-frequency resource set.

As one embodiment, the target information set is used for explicitly indicating the reference time-frequency resource set.

As one embodiment, the target information set is used for implicitly indicating the reference time-frequency resource set.

As one embodiment, the target information set is used for indicating the time domain resources occupied by the reference time-frequency resource set and the frequency domain resources occupied by the reference time-frequency resource set.

As one embodiment, the target information set is used for indicating the time domain resources occupied by the first time-frequency resource subset and the frequency domain resources occupied by the first time-frequency resource subset.

As one embodiment, the target information set is used for indicating the time domain resources occupied by the second time-frequency resource subset and the frequency domain resources occupied by the second time-frequency resource subset.

As one embodiment, the target information set is used for indicating the time domain resources occupied by the first time-frequency resource subset, the frequency domain resources occupied by the first time-frequency resource subset, the time domain resources occupied by the second time-frequency resource subset, and the frequency domain resources occupied by the second time-frequency resource subset.

As one embodiment, the target information set is used for indicating the time domain resources occupied by the first time-frequency resource subset, the frequency domain resources occupied by the first time-frequency resource subset, and the time domain resources occupied by the second time-frequency resource subset.

As one embodiment, the target information set is used for indicating the time domain resources occupied by the first time-frequency resource subset, the frequency domain resources occupied by the first time-frequency resource subset, and the frequency domain resources occupied by the second time-frequency resource subset.

As one embodiment, the target information set is used for indicating the first time-frequency resource subset.

As one embodiment, the target information set is used for explicitly indicating the first time-frequency resource subset.

As one embodiment, the target information set is used for implicitly indicating the first time-frequency resource subset.

As one embodiment, the target information set is used for indicating the second time-frequency resource subset.

As one embodiment, the target information set is used for explicitly indicating the second time-frequency resource subset.

As one embodiment, the target information set is used for implicitly indicating the second time-frequency resource subset.

As one embodiment, the symbol is a single carrier symbol.

As one embodiment, the symbol is a multi-carrier symbol.

As one embodiment, the multi-carrier symbol is an OFDM (Orthogonal Frequency Division Multiplexing) symbol.

As one embodiment, the symbol is obtained after OFDM symbol generation of an output of transform precoding.

As one embodiment, the multi-carrier symbol is an SC-FDMA (Single Carrier-Frequency Division Multiple Access) symbol.

As one embodiment, the multi-carrier symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, "occupied frequency domain resources" refer to: occupied subcarriers.

As one embodiment, "occupied frequency domain resources" refer to: occupied RBs.

As one embodiment, "occupied time domain resources" refer to: occupied symbols.

As one embodiment, "occupied time domain resources" refer to: occupied slots.

As one embodiment, "occupied time domain resources" refer to: occupied subframes.

Typically, "occupied time-frequency resources" refer to: occupied REs.

As one embodiment, the first time-frequency resource group occupies at least one RE.

As one embodiment, the first time-frequency resource group occupies a plurality of REs.

As one embodiment, the first time-frequency resource group occupies at least one RB in the frequency domain and occupies at least one symbol in the time domain.

As one embodiment, the physical channel occupied by the first signal is a PUCCH.

As one embodiment, the physical channel occupied by the first signal is a PUSCH.

As one embodiment, the physical channel occupied by the first signal is a PRACH.

As one embodiment, the first signal comprises a CSI-RS (Channel State Information-Reference Signal).

As one embodiment, the first signal comprises an SRS.

As one embodiment, a transmission channel corresponding to the first signal comprises a UL-SCH.

As one embodiment, the physical channel occupied by the first signal is a PUSCH with a dynamic grant.

As one embodiment, the physical channel occupied by the first signal is a PUSCH with a configured grant.

As one embodiment, the first signal occupies parts or all of the resources in the first time-frequency resource group.

As one embodiment, the first signal occupies parts of the resources in the first time-frequency resource group.

As one embodiment, the first signal occupies the first time-frequency resource group.

As one embodiment, the meaning of the sentence "the first signal is associated with at least one of the first identity or the second identity" comprises: the first signal is associated with only one of the first identity or the second identity.

As one embodiment, the meaning of the sentence "the first signal is associated with at least one of the first identity or the second identity" comprises: the first signal is associated with the first identity, or the first signal is associated with the second identity, or the first signal is associated with the first identity and the second identity.

As one embodiment, the meaning of the sentence "the first signal is associated with at least one of the first identity or the second identity" comprises: the first signal satisfies one of the following three conditions:
- the first signal is associated with the first identity;
- the first signal is associated with the second identity; and
- the first signal is associated with the first identity and the second identity.

As one embodiment, the first serving cell configuration information comprises first downlink BWP configuration information, the first downlink BWP configuration information is used for configuring the first BWP, the first downlink BWP configuration information is associated with target uplink configuration information, and the target uplink configuration information is used for the first signal.

As one embodiment, the first serving cell configuration information comprises target uplink configuration information, and the target uplink configuration information is used for the first signal.

As one embodiment, the target uplink configuration information comprises at least one of pucch-Config, pusch-Config, configuredGrantConfig or srs-Config.

As one embodiment, the target uplink configuration information comprises IE pucch-Config.

As one embodiment, the target uplink configuration information comprises IE pusch-Config.

As one embodiment, the target uplink configuration information comprises IE configuredGrantConfig.

As one embodiment, the target uplink configuration information comprises IE srs-Config.

As one embodiment, the first downlink BWP configuration information comprises the target uplink configuration information.

As one embodiment, the first downlink BWP configuration information is associated with uplink BWP configuration information, and the uplink BWP configuration information comprises the target uplink configuration information.

As one sub-embodiment of the above-mentioned embodiment, the one uplink BWP configuration information to which the first downlink BWP configuration information is associated comprises IE BWP-Uplink.

As one sub-embodiment of the above-mentioned embodiment, the one uplink BWP configuration information to which the first downlink BWP configuration information is associated comprises IE BWP-UplinkCommon.

As one sub-embodiment of the above-mentioned embodiment, the one uplink BWP configuration information to which the first downlink BWP configuration information is associated comprises IE BWP-UplinkDedicated.

As one embodiment, the target uplink configuration information comprises IE pucch-Config.

As one sub-embodiment of this embodiment, a physical layer channel occupied by the first signal comprises a PUCCH.

As one embodiment, the target uplink configuration information comprises IE pusch-Config.

As one embodiment, the target uplink configuration information comprises IE configuredGrantConfig.

As one sub-embodiment of the above-mentioned two embodiments, the physical layer channel occupied by a first signal comprises a PUSCH.

As one embodiment, the target uplink configuration information comprises IE srs-Config.

As one sub-embodiment of this embodiment, the first signal comprises an SRS.

As one embodiment, the same RRC signaling is used for indicating an identity associated with the target uplink configuration information and the first signal.

As one sub-embodiment of this embodiment, the RRC signaling comprises IE ServingCellConfig.

As one embodiment, the first serving cell configuration information is used for indicating the identity associated with the target uplink configuration information and the first signal.

As one embodiment, the target uplink configuration information is used for configuring the first signal.

As one embodiment, the target uplink configuration information is used for determining whether the first signal is associated with the first identity or the second identity.

As one embodiment, the method for use in the first node comprises:
receiving first signaling,
wherein the first signaling is used for triggering or scheduling the first signal, and the first signaling is used for determining an identity associated with the first signal.

As one embodiment, the first receiver receives the first signaling, wherein the first signaling is used for triggering or scheduling the first signal, and the first signaling is used for determining an identity associated with the first signal.

As one embodiment, the method for use in the second node comprises:
sending first signaling,
wherein the first signaling is used for triggering or scheduling the first signal, and the first signaling is used for determining an identity associated with the first signal.

As one embodiment, the second transmitter sends the first signaling, wherein the first signaling is used for triggering or scheduling the first signal, and the first signaling is used for determining an identity associated with the first signal.

As one embodiment, when the first signal is associated with the first identity, the identity associated with the first signal is the first identity.

As one embodiment, when the first signal is associated with the second identity, the identity associated with the first signal is the second identity.

As one embodiment, when the first signal is associated with the first identity and the first identity, the identities associated with the first signal comprise the first identity and the second identity.

As one embodiment, the meaning of the sentence "whether the first signal is sent in the first time-frequency resource group at least depends on an identity associated with the first signal" comprises: whether the first signal is sent in the first time-frequency resource group only depends on the identity associated with the first signal.

As one embodiment, the meaning of the sentence "whether the first signal is sent in the first time-frequency resource group at least depends on an identity associated with the first signal" comprises: whether the first signal is sent in the first time-frequency resource group depends on the identity associated with the first signal and information other than the identity associated with the first signal.

As one embodiment, the meaning of the sentence "whether the first signal is sent in the first time-frequency resource group at least depends on an identity associated with the first signal" comprises: the reference time-frequency resource set comprises a first time-frequency resource subset and a second time-frequency resource subset, and whether the first signal is sent in the first time-frequency resource group depends on the identity associated with the first signal and whether the first time-frequency resource group belongs to the first time-frequency resource subset or the second time-frequency resource subset.

### Embodiment 2

Embodiment 2 illustrates a schematic diagram of a network architecture according to one embodiment of the present application, as shown in FIG. 2.

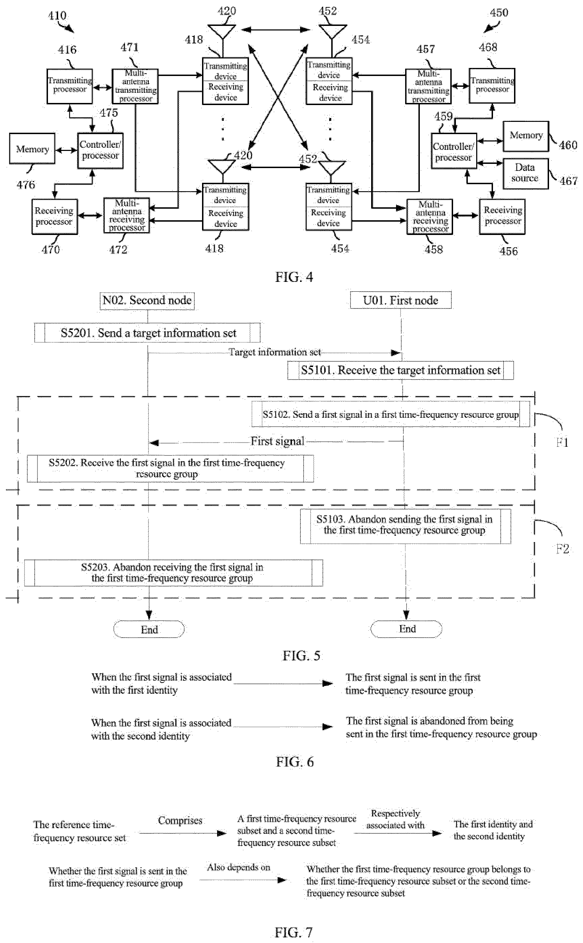

FIG. 2 illustrates a network architecture 200 of LTE (Long-Term Evolution), LTE-A (Long-Term Evolution Advanced) and future 5G systems. The network architecture 200 of LTE, LTE-A and future 5G systems is referred to an EPS (Evolved Packet System) 200. The 5G NR or LTE network architecture 200 may be referred to as a 5GS (5G System)/EPS (Evolved Packet System) 200 or some other suitable terms. The 5GS/EPS 200 may comprise one or more pieces of UE (User Equipment) 201, one piece of UE241 communicating with the UE201 via a sidelink, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. 5GS/EPS200 can be interconnected with other access networks, but for simplicity, these entities/interfaces are not shown. As shown in FIG. 2, 5GS/EPS200 provides a packet switching service, but those skilled the art will easily understand that the various concepts presented throughout the present application can be extended to a network that provides a circuit switching service. NG-RAN202 comprises an NR (New Radio) node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (sending and receiving point), or some other suitable terms. The gNB203 provides an access point to 5GC/EPC210 for UE201. Examples of UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatus. Those skilled in the art may also call the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to 5GC/EPC210 by an S1/NG interface. 5GC/EPC210 comprises an MME (Mobility Management Entity)/AMF (Authentication Management Field)/SMF (Session Management Function) 211, other MME/AMF/SMF214, S-GW (Service Gateway)/UPF (User Plane Function) 212, and a P-GW (Packet Data Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocol) packets are communicated by the S-GW/UPF212, and the S-GW/UPF212 is itself connected to P-GW/UPF213. The P-GW provides UE IP address allocation and other functions. The P-GW/UPF213 is connected to the Internet service 230. The Internet service 230 comprises an Internet protocol service corresponding to an operator, which may specifically comprise the Internet, the intranet, an IMS (IP Multimedia Subsystem), and a packet switching service.

As one embodiment, the first node in the present application comprises the UE201.

As one embodiment, the first node in the present application comprises the UE241.

As one embodiment, the second node in the present application comprises the gNB203.

### Embodiment 3

Embodiment 3 illustrates a schematic diagram of an embodiment of radio protocol architectures for a user plane and a control plane according to one embodiment of the present application, as shown in FIG. 3.

Embodiment 3 shows a schematic diagram of an embodiment of radio protocol architectures for one user plane and one control plane according to the present application, as shown in FIG. 3. FIG. 3 is a schematic diagram illustrating an embodiment of radio protocol architectures for a user plane 350 and a control plane 300, and FIG. 3 exhibits the radio protocol architecture for the control plane 300 between a first communication node device (UE, gNB, or RSU in V2X) and a second communication node device (gNB, UE, or RSU in V2X) or between two pieces of UE by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is above PHY301 and is responsible for the link between the first communication node device and the second communication node device or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearer and logical channels. The PDCP sublayer 304 also provides security by encrypting data packets, and provides zone-crossing mobility support between the second communication node devices for the first communication node device. The RLC sublayer 303 provides segmentation and reassembly of upper-layer data packets, retransmission of lost data packets, and reordering of data packets to compensate for unordered reception caused by HARQ. The MAC sublayer 302 provides multiplexing between logical and transmission channels. The MAC sublayer 302 is also responsible for allocating, between the first communication node devices, various radio resources (for example, resource blocks) in one cell. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring a lower layer by using the RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sublayer 354 in the L2 layer 355, the RLC sublayer 353 in the L2 layer 355, and the MAC sublayer 352 in the L2 layer 355 is substantially the same as that in the control plane 300 for the corresponding layers and sublayers, but the PDCP sublayer 354 also provides header compression for upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between a QoS stream and a data radio bearer (DRB) to support the diversity of services. Although not shown, the first communication node device may have several upper layers above the L2 layer 355, comprising a network layer (for example, an IP layer) terminated at P-GW on the network side and an application layer terminated at the connected other end (for example, remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the target information set is generated in the RRC sublayer 306.

As one embodiment, the first serving cell configuration information is generated in the RRC sublayer 306.

As one embodiment, the first signaling in this matter is generated in the PHY301.

As one embodiment, the first signal is generated in the PHY301.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

A first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

A second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In a transmission from the first communication device 410 to the second communication device 450, at the first communication device 410, an upper-layer data packet from a core network is provided to the controller/processor 475. The controller/processor 475 implements the functionality of the L2 layer. In DL, the controller/processor 475 provides header compression, encryption, packet segmentation and reordering, multiplexing between logical and transmission channels, and radio resource allocation to the second communication device 450 based on various priority metrics. The controller/processor 475 is also responsible for an HARQ operation and retransmission of a lost packet, and for signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding, and beamforming processing on the coded and modulated symbols to generate one or more parallel streams. The transmitting processor 416 then maps each parallel stream to a subcarrier, the modulated symbol is multiplexed with a reference signal (for example, a pilot frequency) in the time domain and/or frequency domain, and subsequently an inverse fast Fourier transform (IFFT) is used to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the first communication device 410 to the second communication device 450, at the second communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any parallel stream with the second communication device 450 as the destination. The symbols on each parallel stream are demodulated and recovered in the receiving processor 456, and a soft decision is generated. Subsequently, the receiving processor 456 decodes and deinterleaves the soft decision to recover the upper-layer data and a control signal transmitted by the first communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In DL (DownLink), the controller/processor 459 provides demultiplexing between transmission and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing. The controller/processor 459 is also responsible for performing error detection by using an acknowledgement (ACK) and/or negative acknowledgement (NACK) protocol to support HARQ operations.

In a transmission from the second communication device 450 to the first communication device 410, at the second communication device 450, a data source 467 is used for providing the upper-layer data packet to the controller/processor 459. The data source 467 represents all protocol layers above the L2 layer. Similar to the sending function at the first communication device 410 described in DL, the controller/processor 459 implements header compression, encryption, packet segmentation and reordering, and multiplexing between logical and transmission channels based on wireless resource allocation of the first communication device 410, and implements L2 layer functions for the user plane and the control plane. The controller/processor 459 is also responsible for HARQ operations, retransmission of lost packets, and for signaling to the first communication device 410. The transmitting processor 468 performs modulation mapping and channel coding processing, and the multi-antenna transmitting processor 457 performs digital multi-antenna spatial precoding comprising codebook-based precoding and non-codebook-based precoding, and beamforming processing. Subsequently, the transmitting processor 468 modulates the generated parallel stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the receiving function at the second communication device 450 described in the transmission from the first communication device 410 to the second communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. The controller/processor 475 provides demultiplexing between transmission and logical channels, packet reassembly, decryption, header decompression, and control signal processing to recover the upper-layer data packet from the second communication device 450. The upper-layer data packet from the controller/processor 475 can be provided to the core network. The controller/processor 475 is also responsible for performing error detection by using an ACK and/or NACK protocol to support HARQ operations.

As one embodiment, the second communication device 450 comprises: at least one processor and at least one memory, wherein the at least one memory comprises a computer program code; and the at least one memory and the computer program code are configured to be used with the at least one processor. The second communication device 450 apparatus at least: receives a target information set; and sending a first signal in a first time-frequency resource group, or abandoning sending a first signal in a first time-frequency resource group, wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, the second communication device 450 comprises: a memory storing a computer-readable instruction program, the computer-readable instruction program generates actions when executed by at least one processor, the actions comprise: receiving a target information set; and sending a first signal in a first time-frequency resource group, or abandoning sending a first signal in a first time-frequency resource group, wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, the first communication device 410 comprises: at least one processor and at least one memory, wherein the at least one memory comprises a computer program code; and the at least one memory and the computer program code are configured to be used with the at least one processor. The first communication device 410 apparatus at least: sends a target information set; and receiving a first signal in a first time-frequency resource group, or abandoning receiving a first signal in a first time-frequency resource group, wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, the first communication device 410 comprises: a memory storing a computer-readable instruction program, the computer-readable instruction program generates actions when executed by at least one processor, the actions comprise: sending a target information set; and receiving a first signal in a first time-frequency resource group, or abandoning receiving a first signal in a first time-frequency resource group, wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the receiving device 454, the receiving processor 456, the multi-antenna receiving processor 458, the controller/processor 459, the memory 460, and the data source 467} is used for receiving the first serving cell configuration information in the present application; and at least one of {the antenna 420, the transmitting device 418, the transmitting processor 416, the multi-antenna transmitting processor 471, the controller/processor 475, and the memory 476} is used for sending the first serving cell configuration information in the present application.

As one embodiment, at least one of {the antenna 452, the receiving device 454, the receiving processor 456, the multi-antenna receiving processor 458, the controller/processor 459, the memory 460, and the data source 467} is used for receiving the target information set in the present application; and at least one of {the antenna 420, the transmitting device 418, the transmitting processor 416, the multi-antenna transmitting processor 471, the controller/processor 475, the memory 476} is used for sending the target information set in the present application.

As one embodiment, at least one of {the antenna 452, the transmitting device 454, the transmitting processor 468, the multi-antenna transmitting processor 457, the controller/processor 459, and the memory 460} is used for sending the first signal in the present application; and at least one of {the antenna 420, the receiving device 418, the receiving processor 470, the multi-antenna receiving processor 472, the controller/processor 475, and the memory 476} is used for receiving the first signal in the present application; and

### Embodiment 5

Embodiment 5 illustrates a flow chart of wireless transmission according to one embodiment of the present application, as shown in FIG. 5. In FIG. 5, a first node U01 and a second node N02 are respectively two communication nodes for a transmission by an air interface, wherein the steps in blocks F1 and F2 are alternative.

For **the first node U01,** in step S5101, a target information set is received; in step S5102, a first signal is sent in a first time-frequency resource group; in step S5103, the first signal is abandoned from being sent in the first time-frequency resource group;
for **the second node N02,** in step S5201, the target information set is sent; in step S5202, the first signal is received in the first time-frequency resource group; in step S5203, the first signal is abandoned from being received in the first time-frequency resource group;
in Embodiment 5, first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, the meaning of the sentence "a given time-frequency resource is associated with a given identity" comprises: a given time-frequency resource is reserved for a given signal, and the given signal is associated with a given identity.

As one embodiment, the meaning of the sentence "a given time-frequency resource is associated with a given identity" comprises: a given time-frequency resource is used for transmitting a given signal, and the given signal is associated with a given identity.

As one embodiment, the meaning of the sentence "a given time-frequency resource is associated with a given identity" comprises: a given time-frequency resource is reserved for a given physical channel, and the given physical channel is associated with a given identity.

As one embodiment, the meaning of the sentence "a given time-frequency resource is associated with a given identity" comprises: a given time-frequency resource is used for transmitting a given physical channel, and the given physical channel is associated with a given identity.

As one embodiment, the meaning of the sentence "a given time-frequency resource is associated with a given identity" comprises: a given time-frequency resource is not used for transmitting one signal or physical channel with which an identity is associated is not a given identity.

As one embodiment, the meaning of the sentence "a given time-frequency resource is associated with a given identity" comprises: a given time-frequency resource is used for transmitting one signal or physical channel with which an identity is associated is a given identity, and the given time-frequency resource is also used for transmitting one signal or physical channel with which an identity is associated is one identity other than the given identity.

As one embodiment, the meaning of the sentence "a given time-frequency resource is associated with a given identity" comprises: a given time-frequency resource is applied to a serving cell identified by the given identity.

As one embodiment, the meaning of the sentence "a given time-frequency resource is associated with a given identity" comprises: a given time-frequency resource is used for determining an uplink/downlink TDD configuration of the serving cell identified by the given identity.

As one embodiment, the meaning of the sentence "a given time-frequency resource is associated with a given identity" comprises: a given time-frequency resource is used for determining an uplink/downlink TDD configuration of a TRP corresponding to the given identity.

As one embodiment, the meaning of the sentence "a given time-frequency resource is associated with a given identity" comprises: a given time-frequency resource is used for determining an uplink/downlink TDD configuration used by a node associated with an SS/PBCH block corresponding to a given identity.

As one embodiment, the given physical channel is a PUCCH (Physical Uplink Control Channel).

As one embodiment, the given physical channel is a PUSCH (Physical Uplink Shared Channel).

As one embodiment, the given physical channel is a PRACH (Physical Random Access Channel).

As one embodiment, the given time-frequency resource is one time-frequency resource in the reference time-frequency resource set, and the given identity is the first identity or the second identity.

As one embodiment, the given time-frequency resource is one time-frequency resource in the first time-frequency resource subset, and the given identity is the first identity.

As one embodiment, the given time-frequency resource is one time-frequency resource in the second time-frequency resource subset, and the given identity is the second identity.

As one embodiment, the given time-frequency resource is a first time-frequency resource group, the given identity is the first identity, an identity associated with the first signal is the first identity, and the first signal is sent in the first time-frequency resource group.

As one embodiment, the given time-frequency resource is the first time-frequency resource group, the given identity is the first identity, the identity associated with the first signal is the second identity, and the first signal is abandoned from being sent in the first time-frequency resource group.

As one embodiment, the given time-frequency resource is the first time-frequency resource group, the given identity is the second identity, the identity associated with the first signal is the second identity, and the first signal is sent in the first time-frequency resource group.

As one embodiment, the given time-frequency resource is the first time-frequency resource group, the given identity is the second identity, the identity associated with the first signal is the first identity, and the first signal is abandoned from being sent in the first time-frequency resource group.

As one embodiment, the meaning of "a given signal is associated with a given identity" comprises: spatial characteristics of a given signal are associated with a given identity.

As one embodiment, the meaning of "a given signal is associated with a given identity" comprises: a transmission configuration indicator state of a given signal is associated with a given identity.

As one embodiment, the meaning of "a given signal is associated with a given identity" comprises: one reference signal resource indicated by the **TCI** state of a given signal is associated with a given identity.

As one embodiment, the meaning of "a given signal is associated with a given identity" comprises: a given reference signal resource is used for determining the spatial characteristics of a given signal, and the given reference signal resource is associated with a given identity.

As one embodiment, the given signal is the first signal, and the given identity is the first identity or the second identity.

As one embodiment, the given signal is the first signal, the given reference signal resource is the target reference signal resource, and the given identity is the first identity or the second identity.

As one embodiment, the given signal is the first sub-signal, the given reference signal resource is the target reference signal resource, and the given identity is the first identity or the second identity.

As one embodiment, the given signal is the second sub-signal, the given reference signal resource is the first reference signal resource, and the given identity is the first identity or the second identity.

As one embodiment, the meaning of "a given reference signal resource is associated with a given identity" comprises: a given identity is used for generating a given reference signal resource.

As one embodiment, the meaning of "a given reference signal resource is associated with a given identity" comprises: a given reference signal resource is associated with a cell identified by a given identity.

As one embodiment, the meaning of "a given reference signal resource is associated with a given identity" comprises: a given reference signal resource belongs to or is configured for a cell identified by a given identity.

As one embodiment, the meaning of "a given reference signal resource is associated with a given identity" comprises: a given reference signal resource is sent by a cell identified by a given identity.

As one embodiment, the meaning of "a given reference signal resource is associated with a given identity" comprises: a given reference signal resource and one reference signal resource in a cell identified by a given identity are quasi-colocated (QCL).

As one embodiment, the meaning of "a given reference signal resource is associated with a given identity" comprises: a given reference signal resource and an SS/PBCH block resource in a cell identified by a given identity are quasi-colocated.

As one embodiment, the meaning of "a given reference signal resource is associated with a given identity" comprises: the same quasi-co-located parameter is used for receiving a given reference signal resource and one reference signal resource in a cell identified by a given identity.

As one embodiment, the meaning of "a given reference signal resource is associated with a given identity" comprises: the same quasi-co-located parameter is used for receiving a given reference signal resource and one SS/PBCH block resource in a cell identified by a given identity.

As one embodiment, the given reference signal resource is the target reference signal resource, and the given identity is the first identity or the second identity.

As one embodiment, the given reference signal resource is the first reference signal resource, and the given identity is the first identity or the second identity.

Typically, the spatial characteristic of the given signal comprises at least one of a spatial sending filter, a spatial sending parameter, an antenna port, or a precoding.

As one embodiment, the meaning of the sentence "a given reference signal resource is used for determining the spatial characteristic of a given signal" comprises: the given reference signal resource and a DMRS of a PUSCH occupied by the given signal are quasi co-located.

As one embodiment, the meaning of the sentence "the given reference signal resource and the DMRS of the PUSCH occupied by the given signal are quasi-co-located" comprises: the given reference signal resource is a downlink reference signal resource, and the same spatial characteristics are used for receiving the given reference signal resource and sending the DMRS of the PUSCH occupied by the given signal; and the spatial characteristics comprise at least one of the spatial domain filter, the spatial parameter, the antenna port, or the precoding.

As one embodiment, the meaning of the sentence "the given reference signal resource and the DMRS of the PUSCH occupied by the given signal are quasi-co-located" comprises: the given reference signal resource is an uplink reference signal resource, and the same spatial characteristics are used for sending the given reference signal resource and sending the DMRS of the PUSCH occupied by the given signal; and the spatial characteristic comprises at least one of the spatial sending filter, the spatial sending parameter, the antenna port, or the precoding.

As one embodiment, the meaning of the sentence "a given reference signal resource is used for determining a spatial characteristic of a given signal" comprises: the given reference signal resource is a downlink reference signal resource, and the same spatial characteristics are used for receiving the given reference signal resource and sending the DMRS of the PUSCH occupied by the given signal; and the spatial characteristics comprise at least one of the spatial domain filter, the spatial parameter, the antenna port, or the precoding.

As one embodiment, the meaning of the sentence "a given reference signal resource is used for determining a spatial characteristic of a given signal" comprises: the given reference signal resource is an uplink reference signal resource, and the same spatial characteristics are used for sending the given reference signal resource and sending the DMRS of the PUSCH occupied by the given signal; and the spatial characteristic comprises at least one of the spatial sending filter, the spatial sending parameter, the antenna port, or the precoding.

As one embodiment, the meaning of the sentence "a given reference signal resource is used for determining a spatial characteristic of a given signal" comprises: the given reference signal resource is a downlink reference signal resource, and the same spatial characteristics are used for receiving the given reference signal resource and sending the given signal; and the spatial characteristics comprise at least one of the spatial domain filter, the spatial parameter, the antenna port, or the precoding.

As one embodiment, the meaning of the sentence "a given reference signal resource is used for determining a spatial characteristic of a given signal" comprises: the given reference signal resource is an uplink reference signal resource, and the same spatial characteristics are used for sending the given reference signal resource and sending the given signal; and the spatial characteristic comprises at least one of the spatial sending filter, the spatial sending parameter, the antenna port, or the precoding.

As one embodiment, the given reference signal resource is the target reference signal resource, and the given signal is the first signal.

As one embodiment, the given reference signal resource is the target reference signal resource, and the given signal is the first signal.

As one embodiment, the given reference signal resource is the target reference signal resource, and the given signal is the first sub-signal.

As one embodiment, the given reference signal resource is the first reference signal resource, and the given signal is the second sub-signal.

As one embodiment, the uplink reference signal resource comprises an SRS (Sounding Reference Signal) resource.

As one embodiment, the uplink reference signal resource comprises at least one of the SRS resource or a UL (UpLink) DMRS (DeModulation Reference Signals).

As one embodiment, the downlink reference signal resource comprises at least one of a CSI-RS (Channel State Information Reference Signal) resource or a SS/PBCH (Synchronization Signal/Physical Broadcast Channel) block resource.

As one embodiment, the downlink reference signal resource comprises the CSI-RS resource.

As one embodiment, the second reference signal resource comprises the SS/PBCH block.

As one embodiment, one TCI (Transmission Configuration Indication) state indicates one quasi co-location relationship.

As one embodiment, one TCI state indicates one or more reference signal resources.

As one embodiment, one TCI state indicates at least one reference signal resource.

As one embodiment, any reference signal resource indicated by one TCI state is one of the SRS (Sounding Reference Signal) resource, the CSI-RS (Channel State Information Reference Signal) resource, or the SS/PBCH (Synchronization Signal/Physical Broadcast Channel) block resource.

As one embodiment, any reference signal resource indicated by one TCI state is the CSI-RS resource or the SS/PBCH block resource.

As one embodiment, one TCI state indicates at least one reference signal resource and the QCL (Quasi-Co-Located) parameter corresponding to each reference signal resource.

As one embodiment, one TCI state indicates at least one reference signal resource and the type of the QCL parameter corresponding to each reference signal resource.

As one embodiment, the types of the QCL parameters comprise TypeA, TypeB, TypeC, and TypeD.

As one embodiment, the QCL parameters of TypeA comprise Doppler shift, Doppler spread, average delay, and delay spread.

As one embodiment, the QCL parameters of TypeB comprise Doppler shift and Doppler spread.

As one embodiment, the QCL parameters of TypeC comprise Doppler shift and average delay.

As one embodiment, the QCL parameters of TypeD comprise Spatial Rx parameters.

As one embodiment, for the specific definitions of TypeA, TypeB, TypeC and TypeD, refer to Section 5.1.5 of 3GPP TS38.214.

As one embodiment, the QCL parameters comprise one or more of delay spread, Doppler spread, Doppler shift, average delay, or spatial Rx parameter.

As one embodiment, the QCL parameters comprise Doppler shift and Doppler spread.

As one embodiment, the QCL parameters comprise Doppler shift and average delay.

As one embodiment, the QCL parameters comprise a spatial Rx parameter.

As one embodiment, the QCL parameters comprise at least one of a spatial transmitting parameter or a spatial receiving parameter.

As one embodiment, the QCL parameters comprise a spatial domain receive filter.

As one embodiment, the QCL parameters comprise a spatial domain filter.

As one embodiment, the QCL parameter comprises at least one of the spatial domain transmit filter or the spatial domain receive filter.

As one embodiment, the specific definition of TCI state and quasi co-location (QCL) is described in Section 5.1.5 of 3GPP TS38.214.

### Embodiment 6

Embodiment 6 illustrates a schematic diagram of determining whether the first signal is sent in the first time-frequency resource group according to one embodiment of the present application; and this is as shown in FIG. 6.

In Embodiment 6, when the first signal is associated with the first identity, the first signal is sent in the first time-frequency resource group; and when the first signal is associated with the second identity, the first signal is abandoned from being sent in the first time-frequency resource group.

As one embodiment, when the first signal is associated with the first identity and the second identity, the first signal is sent in the first time-frequency resource group.

As one embodiment, when the first signal is associated with the first identity and the second identity, the first signal is abandoned from being sent in the first time-frequency resource group.

As one embodiment, when the first signal is associated with the first identity and the second identity, the first signal comprises a first sub-signal and a second sub-signal, and the time-frequency resources occupied by the first sub-signal overlap the time-frequency resources occupied by the second sub-signal.

As one embodiment, when the first signal is associated with the first identity and the second identity, the first signal comprises a first sub-signal and a second sub-signal, and the time-frequency resources occupied by the first sub-signal and the time-frequency resources occupied by the second sub-signal are the same.

As one embodiment, when the first signal is associated with the first identity and the second identity, the first signal comprises a first sub-signal and a second sub-signal, the first sub-signal is associated with the first identity, and the first sub-signal is associated with the second identity.

### Embodiment 7

Embodiment 7 illustrates a schematic diagram of determining whether the first signal is sent in the first time-frequency resource group according to another embodiment of the present application; and this is as shown in FIG. 7.

In Embodiment 7, the reference time-frequency resource set comprises a first time-frequency resource subset and a second time-frequency resource subset, and the first time-frequency resource subset and the second time-frequency resource subset are respectively associated with the first identity and the second identity; the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

As one embodiment, the first signal is associated with a reference identity in the first identity and the second identity, and the reference identity is one of the first identity or the second identity; the time-frequency resource set to which the first time-frequency resource group in the first time-frequency resource subset and the second time-frequency resource subset belongs is associated with a target identity in the first identity and the second identity, and the target identity is one of the first identity or the second identity; when the reference identity and the target identity are the same, the first signal is sent in the first time-frequency resource group; and when the reference identity and the target identity are different, the first signal is abandoned from being sent in the first time-frequency resource group.

As one embodiment, the first signal is associated with the first identity; when the first time-frequency resource group belongs to the first time-frequency resource subset, the first signal is sent in the first time-frequency resource group; and when the first time-frequency resource group belongs to the second time-frequency resource subset, the first signal is abandoned from being sent in the first time-frequency resource group.

As one embodiment, the first signal is associated with the second identity; when the first time-frequency resource group belongs to the second time-frequency resource subset, the first signal is sent in the first time-frequency resource group; and when the first time-frequency resource group belongs to the first time-frequency resource subset, the first signal is abandoned from being sent in the first time-frequency resource group.

### Embodiment 8

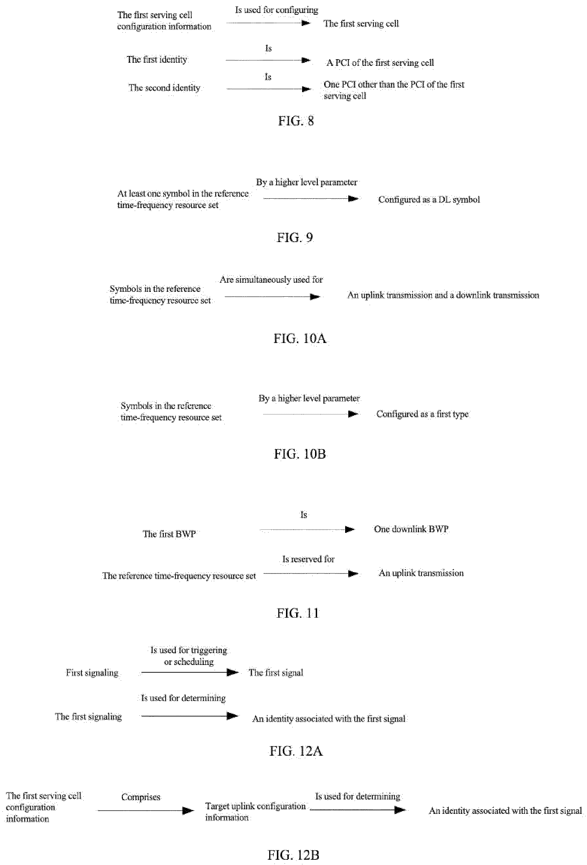

Embodiment 8 illustrates a schematic diagram of a first identity and a second identity according to one embodiment of the present application; and this is as shown in FIG. 8.

In Embodiment 8, the first serving cell configuration information is used for configuring a first serving cell, and the first BWP is one BWP in the first serving cell; and the first identity is a PCI of the first serving cell, and the second identity is one PCI other than the PCI of the first serving cell.

### Embodiment 9

Embodiment 9 illustrates a schematic diagram of a reference time-frequency resource set according to one embodiment of the present application; and this is as shown in FIG. 9.

In Embodiment 9, at least one symbol in the reference time-frequency resource set is configured as a DL (DownLink) symbol by a higher layer parameter.

As one embodiment, at least one symbol in the reference time-frequency resource set is configured as the DL symbol by the target information set.

As one embodiment, the reference time-frequency resource set comprises a first time-frequency resource subset and a second time-frequency resource subset, and the first time-frequency resource subset and the second time-frequency resource subset are respectively associated with the first identity and the second identity.

As one embodiment, at least one symbol in the first time-frequency resource subset is configured as the DL symbol by the higher layer parameter.

As one embodiment, at least one symbol in the second time-frequency resource subset is configured as the DL symbol by the higher layer parameter.

As one embodiment, at least one symbol in the first time-frequency resource subset is configured as the DL symbol by the target information set.

As one embodiment, at least one symbol in the second time-frequency resource subset is configured as the DL symbol by the target information set.

As one embodiment, each symbol in the reference time-frequency resource set is configured as the DL symbol by the higher layer parameter.

As one embodiment, parts of the symbols in the reference time-frequency resource set are configured as the DL symbols by the higher layer parameter.

As one embodiment, the symbol in the reference time-frequency resource set is configured as the DL symbol or a Flexible symbol by the higher layer parameter.

As one embodiment, at least one symbol in the reference time-frequency resource set is configured as the DL symbol by the higher layer parameter tdd-UL-DL-ConfigurationCommon or tdd-UL-DL-ConfigurationDedicated.

As one embodiment, each symbol in the reference time-frequency resource set is configured as the DL symbol by the higher layer parameter tdd-UL-DL-ConfigurationCommon or tdd-UL-DL-ConfigurationDedicated.

As one embodiment, parts of the symbols in the reference time-frequency resource set are configured as the DL symbols by the higher layer parameter tdd-UL-DL-ConfigurationCommon or tdd-UL-DL-ConfigurationDedicated.

As one embodiment, the symbol in the reference time-frequency resource set is configured as the DL symbol or the Flexible symbol by the higher layer parameter tdd-UL-DL-ConfigurationCommon or tdd-UL-DL-ConfigurationDedicated.

At least one symbol in the reference time-frequency resource set is configured as the DL symbol by the higher layer parameter tdd-LTL-DL-ConfigurationCommon.

As one embodiment, each symbol in the reference time-frequency resource set is configured as the DL symbol by the higher layer parameter tdd-UL-DL-ConfigurationCommon.

As one embodiment, parts of the symbols in the reference time-frequency resource set are configured as the DL symbols by the higher layer parameter tdd-UL-DL-ConfigurationCommon.

As one embodiment, the symbol in the reference time-frequency resource set is configured as the DL symbol or the Flexible symbol by the higher layer parameter tdd-UL-DL-ConfigurationCommon.

### Embodiments 10A-10B

Embodiments 10A-10B respectively illustrate a schematic diagram of a reference time-frequency resource set according to another embodiment of the present application; and this is shown in FIGS. 10A-10B.

In Embodiment 10A, the symbols in the reference time-frequency resource set are simultaneously used for an uplink transmission and a downlink transmission.

As one embodiment, a sender of the target information set simultaneously receives and sends in the reference time-frequency resource set.

As one embodiment, a sender of the target information set simultaneously receives and sends wireless signals in the reference time-frequency resource set.

As one embodiment, a sender of the target information set simultaneously receives and sends wireless signals in at least one symbol in the reference time-frequency resource set.

As one embodiment, a sender of the target information set simultaneously receives and sends wireless signals in any symbol in the reference time-frequency resource set.

As one embodiment, in the first serving cell, a sender of the target information set simultaneously receives and sends wireless signals in the reference time-frequency resource set.

As one embodiment, in the first serving cell, a sender of the target information set simultaneously receives and sends wireless signals in any symbol in the reference time-frequency resource set.

As one embodiment, in the first serving cell, a sender of the target information set simultaneously receives and sends wireless signals in at least one symbol in the reference time-frequency resource set.

As one embodiment, in a serving cell group where the first serving cell is located, a sender of the target information set simultaneously receives and sends wireless signals in the reference time-frequency resource set.

As one embodiment, in the first serving cell, a sender of the target information set simultaneously receives and sends wireless signals in the reference time-frequency resource set.

As one embodiment, in the first BWP, a sender of the target information set simultaneously receives and sends wireless signals in the reference time-frequency resource set.

As one embodiment, in the first BWP, a sender of the target information set simultaneously receives and sends wireless signals in the reference time-frequency resource set.

As one embodiment, a sender of the target information set supports simultaneously receiving and sending in the reference time-frequency resource set.

As one embodiment, a sender of the target information set supports simultaneously receiving and sending wireless signals in the reference time-frequency resource set.

As one embodiment, a sender of the target information set supports simultaneously receiving and sending wireless signals in at least one symbol in the reference time-frequency resource set.

As one embodiment, a sender of the target information set supports simultaneously receiving and sending wireless signals in any symbol in the reference time-frequency resource set.

As one embodiment, in the first serving cell, a sender of the target information set supports simultaneously receiving and sending wireless signals in the reference time-frequency resource set.

As one embodiment, in the first serving cell, a sender of the target information set supports simultaneously receiving and sending wireless signals in any symbol in the reference time-frequency resource set.

As one embodiment, in the first serving cell, a sender of the target information set supports simultaneously receiving and sending wireless signals in at least one symbol in the reference time-frequency resource set.

As one embodiment, in the first serving cell, a sender of the target information set supports simultaneously receiving and sending wireless signals in the reference time-frequency resource set.

As one embodiment, in the first BWP, a sender of the target information set supports simultaneously receiving and sending wireless signals in the reference time-frequency resource set.

As one embodiment, in the first BWP, a sender of the target information set supports simultaneously receiving and sending wireless signals in the reference time-frequency resource set.

As one embodiment, the reference time-frequency resource set comprises symbols simultaneously used for the uplink transmission and the downlink transmission.

As one embodiment, any symbol in the reference time-frequency resource set can be simultaneously used for the uplink transmission and the downlink transmission.

As one embodiment, any symbol in the reference time-frequency resource set is simultaneously used for the uplink transmission and the downlink transmission.

As one embodiment, at least one symbol in the reference time-frequency resource set is simultaneously used for the uplink transmission and the downlink transmission.

As one embodiment, any symbol in the reference time-frequency resource set is simultaneously used, in the first serving cell, for the uplink transmission and the downlink transmission.

As one embodiment, at least one symbol in the reference time-frequency resource set is simultaneously used, in the first serving cell, for the uplink transmission and the downlink transmission.

As one embodiment, at least one symbol in the reference time-frequency resource set is simultaneously used, in the serving cell group where the first serving cell is located, for the uplink transmission and the downlink transmission.

As one embodiment, at least one symbol in the reference time-frequency resource set is simultaneously used, in the first BWP, for the uplink transmission and the downlink transmission.

As one embodiment, at least one symbol in the reference time-frequency resource set is simultaneously used, in the first BWP, for the uplink transmission and the downlink transmission.

As one embodiment, the reference time-frequency resource set does not comprise symbols used for a transmission of a first type of downlink signals, and the first type of downlink signals comprises one or more of an SS (Synchronisation Signal)/PBCH (physical broadcast channel) block, a CORESET (COntrol REsource SET) with an index of 0, or an SIB (System Information Block).

As one embodiment, the reference time-frequency resource set does not comprise symbols used for a transmission of a first type of downlink signals, and the first type of downlink signals comprises one or more of the SS/PBCH blocks of the first serving cell, the CORESET with an index of 0 or the SIB.

In Embodiment 10B, the symbols in the reference time-frequency resource set are configured as the first type by a higher layer parameter.

As one embodiment, the symbols in the reference time-frequency resource set are configured as the first type by the target information set.

As one embodiment, the first type is different from uplink and downlink.

As one embodiment, the first type is different from uplink, downlink and flexible.

As one embodiment, in the first serving cell, the target information set configures the symbols in the reference time-frequency resource set as the first type.

As one embodiment, in the serving cell group (cell group) where the first serving cell is located, the target information set configures the symbols in the reference time-frequency resource set as the first type.

As one embodiment, in the first BWP, the target information set configures the symbols in the reference time-frequency resource set as the first type.

As one embodiment, in the first BWP, the target information set configures the symbols in the reference time-frequency resource set as the first type.

As one embodiment, the meaning of the sentence that the symbols in the reference time-frequency resource set is configured as the first type comprises: each symbol in the reference time-frequency resource set is configured as the first type.

As one embodiment, the meaning of the sentence that the symbols in the reference time-frequency resource set are configured as the first type comprises: at least one symbol in the reference time-frequency resource set is configured as the first type.

As one embodiment, the meaning of the sentence that the symbols in the reference time-frequency resource set are configured as the first type comprises: the type of the symbols in the reference time-frequency resource set is configured as the first type.

As one embodiment, the meaning of the sentence that the symbols in the reference time-frequency resource set are configured as the first type comprises: the type of each symbol in the reference time-frequency resource set is configured as the first type.

As one embodiment, the meaning of the sentence that the symbols in the reference time-frequency resource set are configured as the first type comprises: the type of at least one symbol in the reference time-frequency resource set is configured as the first type.

As one embodiment, the meaning of the sentence that the target information set is used for determining the reference time-frequency resource set comprises: the target information set configures the symbols in the reference time-frequency resource set as the first type.

As one embodiment, the meaning of the sentence that the target information set is used for determining the reference time-frequency resource set comprises: the target information set configures each symbol in the reference time-frequency resource set as the first type.

As one embodiment, the meaning of the sentence that the target information set is used for determining the reference time-frequency resource set comprises: the target information set configures at least one symbol in the reference time-frequency resource set as the first type.

As one embodiment, the meaning of the sentence that the target information set is used for determining the reference time-frequency resource set comprises: the target information set indicates the type of each symbol in the reference time-frequency resource set.

As one embodiment, the meaning of the sentence that the target information set is used for determining the reference time-frequency resource set comprises: the target information set indicates that the type of each symbol in the reference time-frequency resource set is the first type.

As one embodiment, the meaning of the sentence that the target information set is used for determining the reference time-frequency resource set comprises: the target information set indicates that the type of at least one symbol in the reference time-frequency resource set is the first type.

As one embodiment, when one symbol is configured as the first type, a sender of the target information set simultaneously receives and sends wireless signals on the symbol.

As one embodiment, when one symbol is configured as the first type, a sender of the target information set supports simultaneously receiving and sending wireless signals on the symbol.

As one embodiment, when one symbol is configured as a type other than the first type, a sender of the target information set only receives wireless signals or only sends wireless signals on the symbol.

As one embodiment, when one symbol is configured as a type other than the first type, a sender of the target information set does not support simultaneously receiving and sending wireless signals on the symbol.

As one embodiment, the target information set is used for determining a first time domain resource set, and the first time domain resource set comprises at least one symbol; and the first time domain resource set is orthogonal to the reference time-frequency resource set in a time domain.

As one embodiment, the reference time-frequency resource set comprises symbols that do not belong to the first time domain resource set.

As one embodiment, the reference time-frequency resource set consists of symbols that do not belong to the first time domain resource set.

As one embodiment, the target information set indicates the first time domain resource set.

As one embodiment, the meaning of the sentence that the target information set is used for determining the reference time-frequency resource set comprises: the target information set implicitly indicates the reference time-frequency resource set by indicating the first time domain resource set.

As one embodiment, the first time domain resource set comprises one symbol or a plurality of continuous symbols.

As one embodiment, the first time domain resource set comprises one symbol or a plurality of discontinuous symbols.

As one embodiment, the first time domain resource set comprises at least one slot.

As one embodiment, the first time domain resource set comprises at least one subframe.

As one embodiment, a sender of the target information set only receives wireless signals or only sends wireless signals in the first time domain resource set.

As one embodiment, a sender of the target information set only receives wireless signals or only sends wireless signals in any symbol in the first time domain resource set.

As one sub-embodiment of the above-mentioned embodiment, the first time domain resource set comprises two symbols, and a sender of the target information set only receives wireless signals in one of the two symbols, and only sends wireless signals in the other one of the two symbols.

As one embodiment, a sender of the target information set only receives wireless signals in any symbol in the first time domain resource set.

As one embodiment, a sender of the target information set only sends wireless signals in any symbol in the first time domain resource set.

As one embodiment, a sender of the target information set only receives wireless signals or only sends wireless signals in at least one symbol in the first time domain resource set.

As one embodiment, in the first serving cell a sender of the target information set only receives wireless signals or only sends wireless signals in any symbol in the first time domain resource set.

As one embodiment, the first time domain resource set comprises symbols used only for the uplink transmission.

As one embodiment, the first time domain resource set comprises symbols used only for the downlink transmission.

As one embodiment, the first time domain resource set comprises symbols used only for the uplink transmission and symbols used only for the downlink transmission.

As one embodiment, any symbol in the first time domain resource set is used only for the uplink transmission or used only for the downlink transmission.

As one sub-embodiment of the above-mentioned embodiment, there are two symbols in the first time domain resource set, one of the two symbols is used only for the uplink transmission, and the other one of the two symbols is used only for the downlink transmission.

As one embodiment, any symbol in the first time domain resource set is used only for the uplink transmission.

As one embodiment, any symbol in the first time domain resource set is used only for the downlink transmission.

As one embodiment, any symbol in the first time domain resource set is used, in the first serving cell, only for the uplink transmission or only for the downlink transmission.

As one embodiment, the target information set configures the symbols in the first time domain resource set as a second type.

As one embodiment, the target information set configures each symbol in the first time domain resource set as the second type.

As one embodiment, the target information set configures at least one symbol in the first time domain resource set as the second type.

As one embodiment, the target information set configures the type of each symbol in the first time domain resource set as the second type.

As one embodiment, if one symbol is configured as the second type, a sender of the target information set only receives wireless signals or only sends wireless signals on the one symbol.

As one embodiment, if one symbol is configured as the second type, a sender of the target information set only receives wireless signals on the one symbol.

As one embodiment, if one symbol is configured as the second type, a sender of the target information set only sends wireless signals on the one symbol.

As one embodiment, if one symbol is not configured as the second type, a sender of the target information set simultaneously receives and sends wireless signals on the one symbol.

As one embodiment, the second type is different from the first type.

As one embodiment, the second type is one of uplink or downlink.

As one embodiment, the second type comprises uplink and downlink.

As one embodiment, the second type is one of uplink, downlink or flexible.

As one embodiment, the second type is different from uplink, downlink and flexible.

As one embodiment, the target information set configures the symbols in the first time domain resource set as a third type or a fourth type.

As one embodiment, the target information set configures any symbol in the first time domain resource set as the third type or the fourth type.

As one sub-embodiment of the above-mentioned embodiment, the first time domain resource set comprises two symbols, and the target information set configures one of the two symbols as the third type and configures the other one of the two symbols as the fourth type.

As one embodiment, if one symbol is configured as the third type, a sender of the target information set only receives wireless signals on the one symbol.

As one embodiment, if one symbol is configured as the fourth type, a sender of the target information set only sends wireless signals on the one symbol.

As one embodiment, if one symbol is neither configured as the third type nor the fourth type, a sender of the target information set simultaneously receives and sends wireless signals on the one symbol.

As one embodiment, if one symbol is not configured as one of the third type, the fourth type and flexible, a sender of the target information set simultaneously receives and sends wireless signals on the symbol.

As one embodiment, the third type is downlink and the fourth type is uplink.

As one embodiment, the third type is different from uplink, downlink and flexible; and the fourth type is different from uplink, downlink and flexible.

As one embodiment, a reference time-frequency resource set pool comprises a plurality of symbols, and the target information set indicates the reference time-frequency resource set from the reference time-frequency resource set pool.

As one sub-embodiment of the above-mentioned embodiment, the target information set indicates that only the symbols in the reference time-frequency resource set in the reference time-frequency resource set pool are configured as the first type.

As one sub-embodiment of the above-mentioned embodiment, the first time domain resource set consists of all symbols in the reference time-frequency resource set pool except the reference time-frequency resource set.

As one embodiment, the reference time-frequency resource set pool comprises a plurality of symbols, and the target information set indicates the first time domain resource set from the reference time-frequency resource set pool.

As one sub-embodiment of the above-mentioned embodiment, the target information set indicates that only the symbols in the first time domain resource set in the reference time-frequency resource set pool are configured as the second type.

As one sub-embodiment of the above-mentioned embodiment, the target information set indicates that only the symbols in the first time domain resource set in the reference time-frequency resource set pool are configured as the third type or the fourth type.

As one sub-embodiment of the above-mentioned embodiment, the reference time-frequency resource set consists of all symbols in the reference time-frequency resource set pool except the first time domain resource set.

### Embodiment 11

Embodiment 11 illustrates a schematic diagram of a reference time-frequency resource set according to another embodiment of the present application; and this is as shown in FIG. 11.

In Embodiment 11, the first BWP is one downlink BWP, and the reference time-frequency resource set is reserved for an uplink transmission.

As one embodiment, the reference time-frequency resource set comprises a first time-frequency resource subset and a second time-frequency resource subset, and the first time-frequency resource subset and the second time-frequency resource subset are respectively associated with a first identity and a second identity; and the first time-frequency resource subset is reserved for the uplink transmission when the first identity is used, and the second time-frequency resource subset is reserved for the uplink transmission when the second identity is used.

As one embodiment, the reference time-frequency resource set comprises a first time-frequency resource subset and a second time-frequency resource subset, and the first time-frequency resource subset and the second time-frequency resource subset are respectively associated with a first identity and a second identity; and the first time-frequency resource subset is reserved for the uplink transmission when the first identity is associated with scheduling, and the second time-frequency resource subset is reserved for the uplink transmission when the second identity is associated with the scheduling.

As one embodiment, at least one symbol reserved for the uplink transmission in the reference time-frequency resource set is configured as DL by a higher layer parameter.

### Embodiments 12A-12B

Embodiments 12A-12B illustrate schematic diagrams of identities associated with a first signal according to one embodiment of the present application; and this is shown in FIGS. 12A-12B.

In Embodiment 12A, first signaling is used for triggering or scheduling the first signal, and the first signaling is used for determining an identity associated with the first signal.

In Embodiment 12B, first serving cell configuration information comprises target uplink configuration information, and the target uplink configuration information is used for determining the identity associated with the first signal.

As one embodiment, the meaning of the sentence "the first signaling is used for determining an identity associated with the first signal" comprises: the first signaling is used for indicating the identity associated with the first signal.

As one embodiment, the meaning of the sentence "the first signaling is used for determining an identity associated with the first signal" comprises: the CORESET where the first signaling is located is used for determining the identity associated with the first signal.

As one embodiment, the meaning of the sentence "the first signaling is used for determining an identity associated with the first signal" comprises: the RNTI used for scrambling a CRC of the first signaling is used for determining the identity associated with the first signal.

As one embodiment, the meaning of the sentence "the first signaling is used for determining an identity associated with the first signal" comprises: the first signaling indicates at least one TCI state, and the at least one TCI state indicated by the first signaling is used for indicating the identity associated with the first signal.

As one embodiment, the meaning of the sentence "the first signaling is used for determining an identity associated with the first signal" comprises: the first signaling indicates a first TCI state, and the first TCI state is used for indicating the identity associated with the first signal.

As one embodiment, the meaning of the sentence "the first signaling is used for determining an identity associated with the first signal" comprises: the first signaling indicates a first TCI state and a second TCI state, and the first TCI state and the second TCI state are used for indicating the identity associated with the first signal.

As one embodiment, the meaning of the sentence "the target uplink configuration information is used for determining the identity associated with the first signal" comprises: the target uplink configuration information is used for indicating the identity associated with the first signal.

As one embodiment, the meaning of the sentence "the target uplink configuration information is used for determining the identity associated with the first signal" comprises: the target uplink configuration information indicates at least one TCI state, and the at least one TCI state indicated by the target uplink configuration information is used for indicating the identity associated with the first signal.

As one embodiment, the meaning of the sentence "the target uplink configuration information is used for determining the identity associated with the first signal" comprises: the target uplink configuration information indicates the first TCI state, and the first TCI state is used for indicating the identity associated with the first signal.

As one embodiment, the meaning of the sentence "the first signaling is used for determining an identity associated with the first signal" comprises: the target uplink configuration information indicates the first TCI state and the second TCI state, and the first TCI state and the second TCI state are used for indicating the identity associated with the first signal.

### Embodiment 13

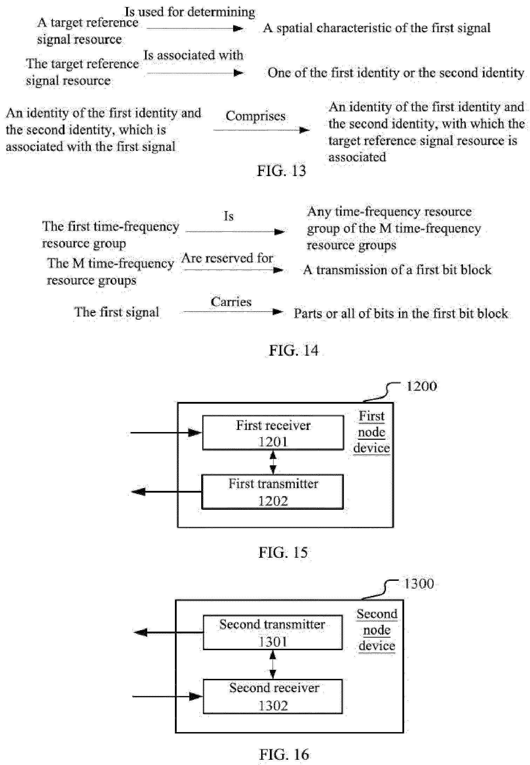

Embodiment 13 illustrates a schematic diagram of an identity associated with a first signal according to another embodiment of the present application; and this is as shown in FIG. 13.

In Embodiment 13, a target reference signal resource is used for determining spatial characteristics of a first signal, and the target reference signal resource is associated with one of a first identity or a second identity; and an identity of the first identity and the second identity, which is associated with the first signal, comprises an identity of the first identity and the second identity, to which the target reference signal resource is associated.

As one embodiment, the target reference signal resource and a first reference signal resource are used for determining the spatial characteristics of the first signal.

As one embodiment, the first signal comprises a first sub-signal and a second sub-signal, the time-frequency resources occupied by the first sub-signal overlap the time-frequency resources occupied by the second sub-signal, the target reference signal resource is used for determining the spatial characteristics of the first sub-signal, and the first reference signal resource is used for determining the spatial characteristics of the second sub-signal.

As one embodiment, the target reference signal resource is associated with one of the first identity or the second identity, the first reference signal resource is associated with one of the first identity or the second identity, and an identity to which the first reference signal resource is associated is different from an identity to which the target reference signal resource is associated; and identities associated with the first signal comprise the first identity and the second identity.

As one embodiment, the first signaling indicates a first TCI state, and the first TCI state indicates the target reference signal resource.

As one embodiment, the first signaling indicates the first TCI state and a second TCI state, the first TCI state indicates the target reference signal resource, and the second TCI state indicates the first reference signal resource.

As one embodiment, the target reference signal resource comprises an SS/PBCH block.

As one embodiment, an index of the target reference signal resource is SSB-Index.

As one embodiment, the target reference signal resource comprises a CSI-RS resource.

As one embodiment, an index of the target reference signal resource is NZP-CSI-RS-ResourceId.

As one embodiment, the target reference signal resource comprises an SRS resource.

As one embodiment, an index of the target reference signal resource is SRS-ResourceId.

As one embodiment, a first reference signal resource comprises the SS/PBCH block.

As one embodiment, an index of the first reference signal resource is the SSB-Index.

As one embodiment, the first reference signal resource comprises the CSI-RS resource.

As one embodiment, an index of the first reference signal resource is the NZP-CSI-RS-ResourceId.

As one embodiment, the first reference signal resource comprises an SRS resource.

As one embodiment, an index of the first reference signal resource is the SRS-ResourceId.

As one embodiment, the first TCI state indicates the target reference signal resource, and configuration information of the first TCI state is used for determining the identity to which the target reference signal resource is associated.

As one embodiment, the first TCI state indicates the target reference signal resource, and the configuration information of the first TCI state comprises the identity to which the target reference signal resource is associated.

As one embodiment, the first TCI state indicates the target reference signal resource; when the configuration information of the first TCI state comprises one PCI, the one PCI included in the configuration information of the first TCI state is a second PCI, and the target reference signal resource is associated with the second PCI; and when the configuration information of the first TCI state does not comprise one PCI, the target reference signal resource is associated with the first PCI.

As one embodiment, the first TCI state indicates the target reference signal resource; when the configuration information of the first TCI state comprises one PCI, the target reference signal resource is associated with the one PCI included in the configuration information of the first TCI state; and when the configuration information of the first TCI state does not comprise one PCI, the target reference signal resource is associated with the first PCI.

As one embodiment, an RRC IE used for indicating the target reference signal resource is also used for indicating the identity to which the target reference signal resource is associated.

As one embodiment, an RRC IE used for indicating the TCI-State corresponding to the target reference signal resource is also used for indicating the identity to which the target reference signal resource is associated.

As one embodiment, an RRC IE used for indicating the TCI-State corresponding to the target reference signal resource is also used for indicating the identity to which the target reference signal resource is associated.

As one embodiment, an RRC IE used for indicating the TCI-UL-State corresponding to the target reference signal resource is also used for indicating the identity to which the target reference signal resource is associated.

As one embodiment, the same one RRC IE is used for indicating a QCL relationship corresponding to the target reference signal resource and the identity to which the target reference signal resource is associated.

### Embodiment 14

Embodiment 14 illustrates a schematic diagram of M time-frequency resource groups according to one embodiment of the present application; and this is as shown in FIG. 14.

In Embodiment 14, a first time-frequency resource group is any time-frequency resource group of the M time-frequency resource groups, the M time-frequency resource groups are reserved for a transmission of a first bit block, and a first signal carries parts or all of bits in the first bit block.

As one embodiment, the M time-frequency resource groups are jointly reserved for one repetition of the first bit block.

As one embodiment, the M time-frequency resource groups are reserved for M repetitions of the first bit block.

As one embodiment, the M time-frequency resource groups are reserved for the M repetitions of the same bit block.

As one embodiment, the M time-frequency resource groups are reserved for M repetitions of the first bit block.

As one embodiment, the M time-frequency resource groups are orthogonal.

As one embodiment, the M time-frequency resource groups are mutually orthogonal in a time domain.

As one embodiment, the M time-frequency resource groups are mutually orthogonal in a frequency domain.

As one embodiment, the M time-frequency resource groups overlap.

As one embodiment, any time-frequency resource group of the M time-frequency resource groups occupies at least one RE.

As one embodiment, any time-frequency resource group of the M time-frequency resource groups occupies a plurality of REs.

As one embodiment, any time-frequency resource group of the M time-frequency resource groups occupies at least one RB in the frequency domain and occupies at least one symbol in the time domain.

As one embodiment, the first bit block comprises one transport block (TB).

As one embodiment, the first bit block comprises at least one transport block (TB).

As one embodiment, the first bit block comprises at least one CBG (Code Block Group).

As one embodiment, the first bit block comprises UCI (Uplink Control Information).

As one embodiment, the first bit block comprises HARQ-ACK (Hybrid Automatic Repeat request-ACKnowledge).

As one embodiment, the first bit block comprises CSI (Channel State Information).

As one embodiment, the first bit block comprises at least one of HARQ-ACK or CSI.

As one embodiment, a physical channel occupied by the first signal is a PUSCH, and the first bit block comprises one transport block (TB).

As one embodiment, the physical channel occupied by the first signal is the PUSCH, and the first bit block comprises at least one transport block (TB).

As one embodiment, the physical channel occupied by the first signal is the PUSCH, and the first bit block comprises at least one CBG (Code Block Group).

As one embodiment, the physical channel occupied by the first signal is a PUCCH, and the first bit block comprises UCI (Uplink Control Information).

As one embodiment, the physical channel occupied by the first signal is the PUCCH, and the first bit block comprises HARQ-ACK (Hybrid Automatic Repeat request-ACKnowledge).

As one embodiment, the physical channel occupied by the first signal is the PUCCH, and the first bit block comprises CSI (Channel State Information).

As one embodiment, the physical channel occupied by the first signal is the PUCCH, and the first bit block comprises at least one of HARQ-ACK or CSI.

### Embodiment 15

Embodiment 15 illustrates a structural block diagram of a processing device for use in a first node device according to one embodiment of the present application; and this is as shown in FIG. 15. In FIG. 15, the processing device 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {the antenna 452, the receiving device 454, the receiving processor 456, the multi-antenna receiving processor 458, the controller/processor 459, the memory 460, and data source 467} in Embodiment 4.

As one embodiment, the first transmitter 1202 comprises at least one of {the antenna 452, the transmitting device 454, the transmitting processor 468, the multi-antenna transmitting processor 457, the controller/processor 459, the memory 460, and the data source 467} in Embodiment 4.

The first receiver 1201 receives a target information set;
the first transmitter 1202 sends a first signal in a first time-frequency resource group, or abandons sending the first signal in the first time-frequency resource group;
in Embodiment 15, first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, when the first signal is associated with the first identity, the first signal is sent in the first time-frequency resource group; and when the first signal is associated with the second identity, the first signal is abandoned from being sent in the first time-frequency resource group.

As one embodiment, the reference time-frequency resource set comprises a first time-frequency resource subset and a second time-frequency resource subset, and the first time-frequency resource subset and the second time-frequency resource subset are respectively associated with a first identity and a second identity; and the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

As one embodiment, the first BWP is one downlink BWP, and the reference time-frequency resource set is reserved for an uplink transmission.

As one embodiment, the first serving cell configuration information is used for configuring a first serving cell, and the first BWP is one BWP in the first serving cell; and the first identity is a PCI of the first serving cell, and the second identity is one PCI other than the PCI of the first serving cell.

As one embodiment, a target reference signal resource is used for determining a spatial characteristic of the first signal, and the target reference signal resource is associated with one of the first identity or the second identity; and an identity of the first identity and the second identity, which is associated with the first signal, comprises an identity of the first identity and the second identity, to which the target reference signal resource is associated.

As one embodiment, the first time-frequency resource group is any time-frequency resource group of M time-frequency resource groups, the M time-frequency resource groups are reserved for a transmission of a first bit block, and the first signal carries parts or all of bits in the first bit block.

As one embodiment, the first receiver 1201 receives the first serving cell configuration information.

As one embodiment, the first serving cell configuration information comprises the target information set, and the first receiver 1201 receives information other than the target information set in the first serving cell configuration information.

### Embodiment 16

Embodiment 16 illustrates a structural block diagram of a processing device for use in a second node device according to one embodiment of the present application; and this is as shown in FIG. 16. In FIG. 16, the processing device 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {the antenna 420, the transmitting device 418, the transmitting processor 416, the multi-antenna transmitting processor 471, the controller/processor 475, and the memory 476} in Embodiment 4.

As one embodiment, the second receiver 1302 comprises at least one of {the antenna 420, the receiving device 418, the receiving processor 470, the multi-antenna receiving processor 472, the controller/processor 475, and the memory 476} in Embodiment 4.

The second transmitter 1301 sends a target information set;
the second receiver 1302 receives a first signal in a first time-frequency resource group, or abandons receiving the first signal in the first time-frequency resource group;
in Embodiment 16, first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

As one embodiment, when the first signal is associated with the first identity, the first signal is sent in the first time-frequency resource group; and when the first signal is associated with the second identity, the first signal is abandoned from being sent in the first time-frequency resource group.

As one embodiment, the reference time-frequency resource set comprises a first time-frequency resource subset and a second time-frequency resource subset, and the first time-frequency resource subset and the second time-frequency resource subset are respectively associated with a first identity and a second identity; and the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

As one embodiment, the first BWP is one downlink BWP, and the reference time-frequency resource set is reserved for an uplink transmission.

As one embodiment, the first serving cell configuration information is used for configuring a first serving cell, and the first BWP is one BWP in the first serving cell; and the first identity is a PCI of the first serving cell, and the second identity is one PCI other than the PCI of the first serving cell.

As one embodiment, a target reference signal resource is used for determining a spatial characteristic of the first signal, and the target reference signal resource is associated with one of the first identity or the second identity; and an identity of the first identity and the second identity, which is associated with the first signal, comprises an identity of the first identity and the second identity, to which the target reference signal resource is associated.

As one embodiment, the first time-frequency resource group is any time-frequency resource group of M time-frequency resource groups, the M time-frequency resource groups are reserved for a transmission of a first bit block, and the first signal carries parts or all of bits in the first bit block.

As one embodiment, the second transmitter 1301 sends the first serving cell configuration information.

As one embodiment, the first serving cell configuration information comprises the target information set, and the second transmitter 1301 sends information other than the target information set in the first serving cell configuration information.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base stations or the system devices in the present application include but are not limited to a macrocell base station, a microcell base station, a Femtocell, a relay base station, a gNB (NR node B) NR node B, a TRP (Transmitter Receiver Point) and other wireless communication devices.

The above is only a preferred embodiment of the present application and is not intended to limit the scope of protection of the present application. Any changes and modifications made based on the embodiments described in the specification, if similar partial or full technical effects can be obtained, should be deemed to be obvious and fall within the scope of protection of the present invention.

## Claims

1. A first node device for use in wireless communication, comprising:
a first receiver for receiving a target information set; and
a first transmitter for sending a first signal in a first time-frequency resource group, or abandoning sending a first signal in a first time-frequency resource group,
wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

2. The first node device according to claim 1, wherein when the first signal is associated with the first identity, the first signal is sent in the first time-frequency resource group; and when the first signal is associated with the second identity, the first signal is abandoned from being sent in the first time-frequency resource group.

3. The first node device according to claim 1, wherein the reference time-frequency resource set comprises a first time-frequency resource subset and a second time-frequency resource subset, and the first time-frequency resource subset and the second time-frequency resource subset are respectively associated with the first identity and the second identity; the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

4. The first node device according to any one of claims 1 to 3, wherein the first BWP is one downlink BWP, and the reference time-frequency resource set is reserved for an uplink transmission.

5. The first node device according to any one of claims 1 to 4, wherein the first serving cell configuration information is used for configuring a first serving cell, and the first BWP is one BWP in the first serving cell; and the first identity is a PCI of the first serving cell, and the second identity is one PCI other than the PCI of the first serving cell.

6. The first node device according to any one of claims 1 to 5, wherein a target reference signal resource is used for determining a spatial characteristic of the first signal, and the target reference signal resource is associated with one of the first identity or the second identity; and an identity of the first identity and the second identity, which is associated with the first signal, comprises an identity of the first identity and the second identity, to which the target reference signal resource is associated.

7. The first node device according to any one of claims 1 to 6, wherein the first time-frequency resource group is any time-frequency resource group of M time-frequency resource groups, the M time-frequency resource groups are reserved for a transmission of a first bit block, and the first signal carries parts or all of bits in the first bit block.

8. A second node device for use in wireless communication, comprising:
a second transmitter for sending a target information set; and
a second receiver for receiving a first signal in a first time-frequency resource group, or abandoning receiving a first signal in a first time-frequency resource group,
wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

9. The second node device according to claim 8, wherein when the first signal is associated with the first identity, the first signal is sent in the first time-frequency resource group; and when the first signal is associated with the second identity, the first signal is abandoned from being sent in the first time-frequency resource group.

10. The second node device according to claim 8, wherein the reference time-frequency resource set comprises a first time-frequency resource subset and a second time-frequency resource subset, and the first time-frequency resource subset and the second time-frequency resource subset are respectively associated with the first identity and the second identity; the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

11. The second node device according to any one of claims 8 to 10, wherein the first BWP is one downlink BWP, and the reference time-frequency resource set is reserved for an uplink transmission.

12. The second node device according to any one of claims 8 to 11, wherein the first serving cell configuration information is used for configuring a first serving cell, and the first BWP is one BWP in the first serving cell; and the first identity is a PCI of the first serving cell, and the second identity is one PCI other than the PCI of the first serving cell.

13. The second node device according to any one of claims 8 to 12, wherein a target reference signal resource is used for determining a spatial characteristic of the first signal, and the target reference signal resource is associated with one of the first identity or the second identity; and an identity of the first identity and the second identity, which is associated with the first signal, comprises an identity of the first identity and the second identity, to which the target reference signal resource is associated.

14. The second node device according to any one of claims 8 to 13, wherein the first time-frequency resource group is any time-frequency resource group of M time-frequency resource groups, the M time-frequency resource groups are reserved for a transmission of a first bit block, and the first signal carries parts or all of bits in the first bit block.

15. A method for use in a wireless communication first node, comprising:
receiving a target information set; and
sending a first signal in a first time-frequency resource group, or abandoning sending a first signal in a first time-frequency resource group,
wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

16. The method according to claim 15, wherein when the first signal is associated with the first identity, the first signal is sent in the first time-frequency resource group; and when the first signal is associated with the second identity, the first signal is abandoned from being sent in the first time-frequency resource group.

17. The method according to claim 15, wherein the reference time-frequency resource set comprises a first time-frequency resource subset and a second time-frequency resource subset, and the first time-frequency resource subset and the second time-frequency resource subset are respectively associated with the first identity and the second identity; the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

18. The method according to any one of claims 15 to 17, wherein the first BWP is one downlink BWP, and the reference time-frequency resource set is reserved for an uplink transmission.

19. The method according to any one of claims 15 to 18, wherein the first serving cell configuration information is used for configuring a first serving cell, and the first BWP is one BWP in the first serving cell; and the first identity is a PCI of the first serving cell, and the second identity is one PCI other than the PCI of the first serving cell.

20. The method according to any one of claims 15 to 19, wherein a target reference signal resource is used for determining a spatial characteristic of the first signal, and the target reference signal resource is associated with one of the first identity or the second identity; and an identity of the first identity and the second identity, which is associated with the first signal, comprises an identity of the first identity and the second identity, to which the target reference signal resource is associated.

21. The method according to any one of claims 15 to 20, wherein the first time-frequency resource group is any time-frequency resource group of M time-frequency resource groups, the M time-frequency resource groups are reserved for a transmission of a first bit block, and the first signal carries parts or all of bits in the first bit block.

22. A method for use in a wireless communication second node, comprising:
sending a target information set; and
receiving a first signal in a first time-frequency resource group, or abandoning receiving a first signal in a first time-frequency resource group,
wherein first serving cell configuration information is used for determining a first BWP, and the first serving cell configuration information is used for indicating a first identity and a second identity; the target information set is used for determining a reference time-frequency resource set, the reference time-frequency resource set belongs to the first BWP in a frequency domain, and the first time-frequency resource group belongs to the reference time-frequency resource set; and the first signal is associated with at least one of the first identity or the second identity, and whether the first signal is sent in the first time-frequency resource group at least depends on an identity associated with the first signal.

23. The method according to claim 22, wherein when the first signal is associated with the first identity, the first signal is sent in the first time-frequency resource group; and when the first signal is associated with the second identity, the first signal is abandoned from being sent in the first time-frequency resource group.

24. The method according to claim 22, wherein the reference time-frequency resource set comprises a first time-frequency resource subset and a second time-frequency resource subset, and the first time-frequency resource subset and the second time-frequency resource subset are respectively associated with the first identity and the second identity; the first time-frequency resource group belongs to one of the first time-frequency resource subset or the second time-frequency resource subset; and whether the first signal is sent in the first time-frequency resource group also depends on whether the first time-frequency resource group belongs to the first time-frequency resource subset or the second time-frequency resource subset.

25. The method according to any one of claims 22 to 24, wherein the first BWP is one downlink BWP, and the reference time-frequency resource set is reserved for an uplink transmission.

26. The method according to any one of claims 22 to 25, wherein the first serving cell configuration information is used for configuring a first serving cell, and the first BWP is one BWP in the first serving cell; and the first identity is a PCI of the first serving cell, and the second identity is one PCI other than the PCI of the first serving cell.

27. The method according to any one of claims 22 to 26, wherein a target reference signal resource is used for determining a spatial characteristic of the first signal, and the target reference signal resource is associated with one of the first identity or the second identity; and an identity of the first identity and the second identity, which is associated with the first signal, comprises an identity of the first identity and the second identity, to which the target reference signal resource is associated.

28. The method according to any one of claims 22 to 27, wherein the first time-frequency resource group is any time-frequency resource group of M time-frequency resource groups, the M time-frequency resource groups are reserved for a transmission of a first bit block, and the first signal carries parts or all of bits in the first bit block.
